# EUROPÄISCHE PATENTSCHRIFT

(11) **EP 0 788 921 B1**
(45) Veröffentlichungstag und Bekanntmachung des Hinweises auf die Patenterteilung: **29.11.2000**
(21) Anmeldenummer: 96110604.4
(22) Anmeldetag: 01.07.1996
(51) Int. Cl.: B60K 26/02, G05G 1/14

(54) **Trägerrahmen für eine Fahrpedaleinheit von Kraftfahrzeugen**
Support frame for an accelerator pedal of motor vehicles
Cadre de support pour ensemble de pédale d'accélérateur d'automobiles

(30) Priorität: 29.08.1995 DE 19531734
(43) Veröffentlichungstag der Anmeldung: 13.08.1997
(73) Patentinhaber: DaimlerChrysler AG, 70567 Stuttgart (DE)
(72) Erfinder: Papenhagen, Dieter, 71334 Waiblingen (DE); Löchle, Manfred, 70329 Stuttgart (DE); Meyer, Thorsten, 70736 Fellbach (DE)

(56) Entgegenhaltungen:
- EP-A- 0 430 600
- DE-A- 2 815 769
- DE-C- 4 343 681
- DE-U- 9 409 892

## Beschreibung

Die Erfindung bezieht sich auf einen Trägerrahmen für eine Fahrpedaleinheit von Kraftfahrzeugen gemäß dem Oberbegriff des Patentanspruchs 1.

Aus der EP 0 430 600 B1 ist bereits ein Trägerrahmen der gattungsgemäßen Art bekannt. An dem Trägerrahmen sind mehrere Fahrpedale gelagert, wobei der Trägerrahmen eine mit mehreren Fixiereinrichtungen ausgestattete Rückwand zur Befestigung des Trägerrahmens an einem fahrzeugfesten Bauteil umfaßt. Mit der Rückwand ist eine nach vorne wegstehende Umfangswand mit Pedalaufnahmen einstückig verbunden, wobei die Pedale zwischen Anschlußplatten der Pedalaufnahmen drehbar gelagert sind. Die Anschlußplatte besitzt eine weitere von der Rückwand beabstandete Fixiereinrichtung zur Befestigung des Trägerrahmens an einem fahrzeugfesten Bauteil.

Zum allgemeinen technischen Hintergrund wird noch auf die DE 28 15 769 A1, 27 28 787 A1, DE 42 26 352 A1 und US 4 218 937 verwiesen.

Der Erfindung liegt die Aufgabe zugrunde, einen Trägerrahmen baulich einfach und kompakt derart auszubilden, daß dessen Montage wesentlich einfacher und kostengünstiger ausgeführt werden kann als beim gattungsgemäßen Stand der Technik.

Die Aufgabe wird erfindungsgemäß durch die im Kennzeichen des Patentanspruches 1 gegebenen Merkmale gelöst. Die Merkmale der Unteransprüche geben vorteilhafte Aus- und Weiterbildungen der Erfindung an.

Ein Vorteil des erfindungsgemäßen Trägerrahmens liegt darin, daß dessen Montage gegenüber bekannten Trägerrahmen wesentlich vereinfacht wird und dadurch auch kostengünstiger möglich ist, da in einem ersten Montageschritt die Steckverbindung des Trägerrahmens lediglich zusammengesteckt werden muß und in einem zweiten Montageschritt der Trägerrahmen gegen diese Steckverbindung mit der zweiten Fixiereinrichtung verspannt wird.

Die erfindungsgemäßen Ausgestaltung nach Anspruch 2 stellt eine baulich besonders einfache Ausführung der Erfindung dar.

Ein Vorteil der Ausgestaltung der Erfindung nach Anspruch 3 liegt in der einfachen Befestigungsmöglichkeit einer Gliederkoppel für mehrgliedrige Fahrpedale, da der Endabschnitt der Gliederkoppel problemlos in die Tasche des Trägerrahmens einschiebbar ist. So kann beispielsweise auch eine Clipsverbindung derart vorgesehen sein, daß der Endabschnitt der Gliederkoppel als Clips ausgebildet ist und die Tasche des Trägerrahmens als Clipsaufnahme dient.

Die erfindungsgemäße Ausgestaltung nach Anspruch 4 stellt eine baulich einfache und kostengünstige Variante der Befestigung des Endabschnitts der Gliederkoppel dar.

Eine bevorzugte bauliche Ausgestaltung der Erfindung ergibt sich nach Anspruch 5. Durch die einstückig ausgeführte Trägerplatte lassen sich die Laschen der zweiten Fixiereinrichtung für den Trägerrahmen und die Befestigungsstifte für die Gliederkoppel an einem fahrzeugfesten Bauteil, beispielsweise einer sogenannten Spritzwand, die zusammen mit einem Bodenteil des Kraftfahrzeuges den Fußraum begrenzt, vormontieren. Bei der Montage des Trägerrahmens nebst Fahrpedal sind dann gleichzeitig der Trägerrahmen an der Spritzwand und die Gliederkoppel an dem Trägerrahmen mit einem Befestigungsteil fixierbar.

Eine bauliche einfache Ausführung der Erfindung ist in Anspruch 6 angegeben. Dabei ist vorzugsweise der Clips an dem beispielsweise aus Kunststoff bestehenden Trägerrahmen angeformt.

Durch die erfindungsgemäße Ausgestaltung nach Anspruch 7 wird eine Erleichterung der Montage dahingehend erreicht, daß die Steckverbindung an dem relativ schwer zugänglichen Teil des Fußraumes angeordnet ist und daß zur Fixierung des Trägerrahmens nötige Verschraubungen und das Einstecken des Befestigungsbolzens an dem guc zugänglichen unteren Teil des Trägerrahmens erfolgt.

Weitere Vorteile der Erfindung gehen aus den übrigen Unteransprüchen und der Beschreibung hervor.

In den Zeichnungen ist die Erfindung anhand eines Ausführungsbeispiels näher erläutert. Es zeigen:
- Fig. 1: einen Längsschnitt durch einen erfindungsgemäßen Trägerrahmen mit einem Fahrpedal für Kraftfahrzeuge, wobei der Trägerrahmen zwei Fixiereinrichtungen aufweist und wobei das Fahrpedal mehrgliedrig ausgeführt und drehbar mit dem Trägerrahmen verbunden ist und einen Hebel, ein Fußpedal und eine Gliederkoppel umfaßt, wobei letztere in einer Tasche über mit Befestigungsstifte an dem Trägerrahmen befestigt ist,
- Fig. 2: einen Schnitt II - II von Fig. 1 durch die zweite Fixiereinrichtung,
- Fig. 3: einen Schnitt III - III von Fig. 1 durch die Befestigung der Gliederkoppel und
- Fig. 4: eine perspektivische Ansicht des erfindungsgemäßen Trägerrahmens.

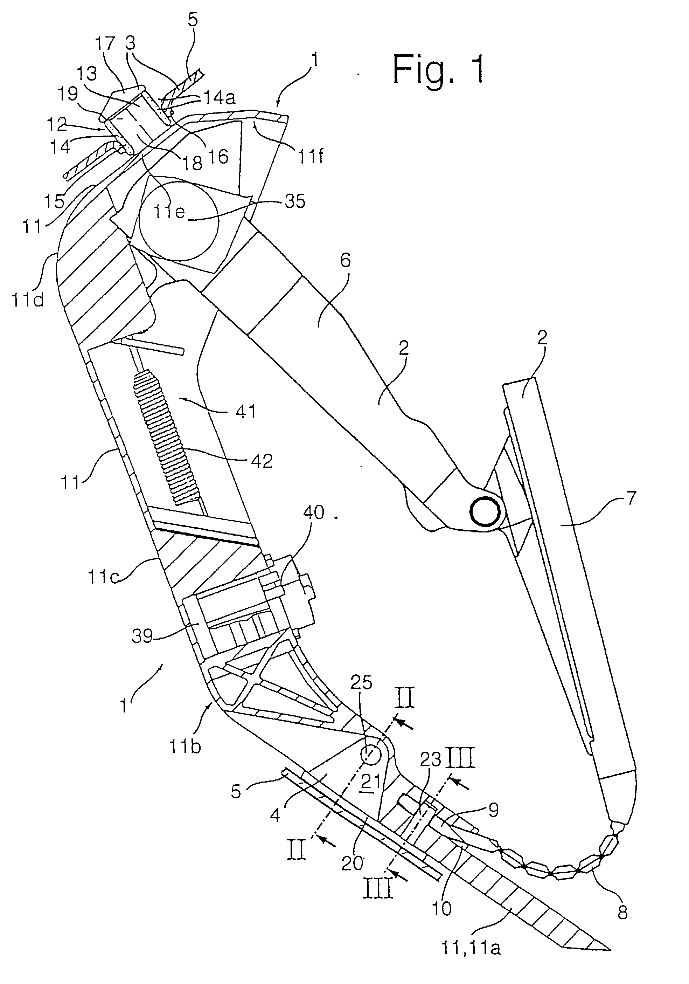

Fig. 1 zeigt einen Längsschnitt eines erfindungsgemäßen Trägerrahmens 1 mit einem drehbar mit diesem verbundenen Fahrpedal 2 für Kraftfahrzeuge, wobei der Trägerrahmen 1 zwei an dessen Rückwand 11 angeordnete Fixiereinrichtungen 3 und 4 aufweist, mit denen dieser an einem fahrzeugfesten Bauteil 5 befestigt ist.

Das Fahrpedal 2 ist mehrgliedrig ausgeführt und umfaßt einen Hebel 6, der an dem Trägerrahmen 1 drehbar angelenkt ist sowie ein mit dem Hebel 6 drehbar verbundenes Fußpedal 7 und eine fest mit dem Fußpedal 7 verbundene Gliederkoppel 8, deren Endabschnitt 9 in einer Tasche 10 über Befestigungsstifte 23, 24 an dem Trägerrahmen 1 lösbar befestigt ist.

Das fahrzeugfeste Bauteil 5, an dem der Trägerrahmen 1 befestigt ist, ist vorzugsweise ein sogenannten Spritzwand, die zusammen mit einem Teil des nicht dargestellten Bodens des Kraftfahrzeuges einen Fußraum bildet.

Die erste Fixiereinrichtung 3 ist als Steckverbindung 12 ausgebildet, wobei im gezeigten Beispiel der Stecker ein einstückig mit einer Rückwand 11 des Trägerrahmens 1 verbundener Clips 13 ist, der in eine Öffnung 14 im fahrzeugfesten Bauteil 5 einklipsbar ist. Zwischen Clips 13 und Öffnung 14 ist eine Gummihülse 15 angeordnet, der zum Halt des Clipses 13 und zum Toleranzausgleich dient. Öffnung 14 und Gummihülse 15 bilden eine Clipsaufnahme 14a. Dabei besitzt die Öffnung 14 auf der dem Trägerrahmen 1 zugewandten Seite ein Umbördelung 16, an der die Gummihülse 15 gehalten ist. Der Clips 13 besitzt eine kegelförmige Nase 17 mit flachem Kegelwinkel, an den sich ein zylinderförmiges Clipsteil 18, das mit dem Trägerrahmen 1 fest verbunden ist, anschließt. Der Durchmesser des Clipsteils 18 ist kleiner als der Durchmesser des Grundkreises des Kegels der Nase 17, wodurch ein Anschlag 19 für die Gummihülse 15 gebildet ist.

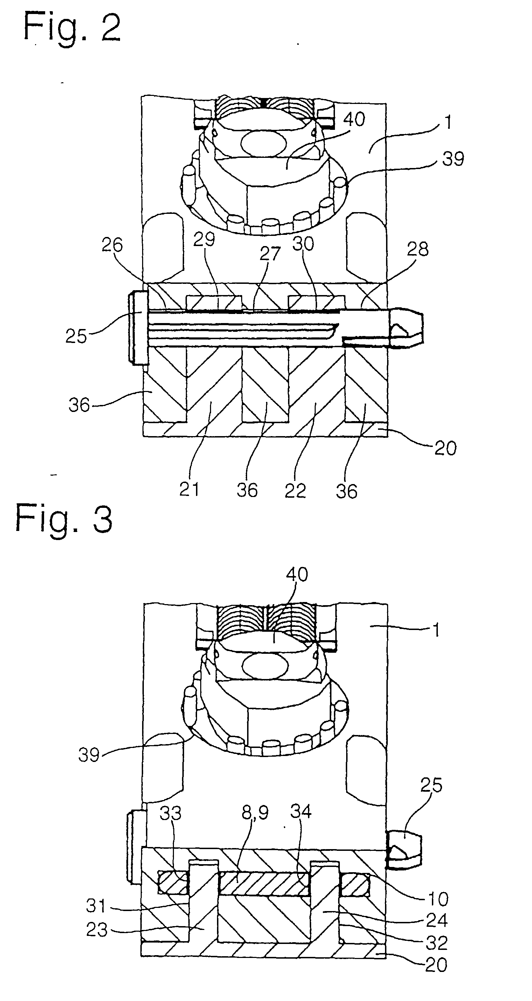

Die zweite Fixiereinrichtung 4 umfaßt eine Trägerplatte 20, die an dem fahrzeugfesten Bauteil 5 befestigt ist. Auf der Trägerplatte 20 sind zwei voneinander beabstandete und normal zu dieser stehende Laschen 21, 22 befestigt. Zudem ist die Trägerplatte 20 mit zwei Befestigungsstiften 23, 24 verbunden. Der Trägerrahmen 1 umgreift in montiertem Zustand die beiden Laschen 21, 22, wobei ein Befestigungsbolzen 25 durch im Trägerrahmen 1 angeordnete Löcher 26-28 und in den Laschen 21, 22 angeordnete Löcher 29, 30 steckbar ist (siehe Fig. 2 und 3).

Bei der Montage des Trägerrahmens 1 nebst an diesem vormontierten Fahrpedal 2, wird zunächst der Trägerrahmen 1 mit seinem Clips 13 in die in der Öffnung 14 befindliche Gummihülse 15 eingesteckt. Dadurch ist der Trägerrahmen 1 an dem fahrzeugfesten Bauteil 5 quer zur und in Einsteckrichtung fixiert und muß nun lediglich gegen Herausfallen gesichert werden. Diese Sicherung wird durch die zweite Fixiereinrichtung 4 übernommen, indem sie den Trägerrahmen 1 nebst Clips 13 gegen das fahrzeugfeste Bauteil 5 spannt, wobei zudem die zweite Fixiereinrichtung 4 den Trägerrahmen 1 am fahrzeugfesten Bauteil 5 festlegt und eine Bewegung des Trägerrahmens 1 durch die Pedalkräfte verhindert. Bei der Montage der zweiten Fixiereinrichtung 4 werden die Löcher 26-28 des Trägerrahmens 1 mit den Löchern 29, 30 der Laschen 21, 22 fluchtend positioniert, sodaß der Befestigungsbolzen 25 problemlos von der Seite einsteckbar ist. Gleichzeitig werden die Befestigungsstifte 23, 24 bei in die Tasche 10 eingeschobenem freiem Endabschnitt 9 der Gliederkoppel 8 quer zu dieser in Führungen 31, 32 des Trägerrahmens 1 und gleichzeitig in Löchern 33, 34 der Gliederkoppel 8 gesteckt.

Durch die beiden Laschen 21, 22 nebst Befestigungsbolzen 25 der zweiten Fixiereinrichtung 4 und der Clipsverbindung 13-15 wird der Trägerrahmen 1 an drei Punkten festgelegt und somit sicher gehalten.

Die Steckverbindung 12 ist in Einbaulage des Trägerrahmens 1 geodätisch oberhalb der zweiten Fixiereinrichtung 4 angeordnet, wobei der an der Rückwand 11 des Trägerrahmens 1 angeordnete Clips 13 im Bereich eines Drehlagers 35 des Fahrpedals 2 (Lager des Hebels 6 im Trägerrahmen 1) angeordnet ist.

Die Kontur des Trägerrahmens 1 ist vorzugsweise an den Verlauf der Spritzwand angepaßt und ist in etwa sichelförmig ausgestaltet: Im vorliegenden Ausführungsbeispiel verläuft in Einbaulage die Rückwand 11 von unten zunächst nach links in einem geraden Abschnitt 11a in einem Winkel von etwa 35 Grad zur Waagerechten nach oben und geht dann in einem Bogenabschnitt 11b in einem Winkel von ca. 70 Grad zur Waagerechten in einen geraden Abschnitt 11c über. Im Bereich des Drehlagers 35 geht der Abschnitt 11c der Rückwand 11 in einer Ausrundung 11d in einen geraden Abschnitt 11e über, an den sich ein in etwa parallel zur Waagerechten verlaufender Abschnitt 11f der Rückwand 11 anschließt, wobei der Abschnitt 11e mit dem Abschnitt 11c einen Winkel von ca. 115 Grad einschließt.

An der Rückwand 11 mit ihren Abschnitten 11a bis 11f sind nach vorne stehende Seitenwände 37, 38 einstückig angeformt. Das Drehlager 35 befindet sich dabei im Bereich der Abschnitte 11d-11f und ist teilweise durch die Seitenwände 37,38 gebildet.

Zwischen den Seitenwänden 37, 38 befindet sich, in etwa in der Mitte des Trägerrahmens 1, eine Aufnahme 39 für einen Kick-Down-Schalter 40 (siehe Fig. 2 und 3) oder ein Endlagensensor für das Fahrpedal 2. Oberhalb der Aufnahme 39 befindet sich eine Öffnung 41 zwischen den Seitenwänden 37, 38, die zur Aufnahme des Hebels 6 des Fahrpedals 2 nebst einer Pedal-Rückzugsfeder 42 dient.

In einer bevorzugten Ausführung der Erfindung besteht der Trägerrahmen 1 und das Fahrpedal 2 nebst Hebel 6, Fußpedal 7 und Gliederkoppel 8 aus Kunststoff, jedoch können auch einzelne oder alle Teile aus Aluminium-Druckguß oder anderen üblichen Werkstoffen gefertigt sein.

In Fig. 2 ist ein Schnitt II - II von Fig. 1 durch die zweite Fixiereinrichtung 4 dargestellt. Auf der Trägerplatte 20 sind die beiden Laschen 21, 22 normal zu dieser stehend befestigt und werden von dem Trägerrahmen 1 mit einem Rahmenteil 36 umgriffen, in dem die Löcher 26-28 angeordnet sind. Zur Montage des Trägerrahmens 1 an das fahrzeugfeste Bauteil 5 werden die Löcher 26-28 mit den Löchern 29,30 der Laschen 21, 22 in Flucht gebracht. Anschließend wird der Befestigungsbolzen 25 durch die Löcher 26-30 gesteckt und somit der Trägerrahmen 1 am fahrzeugfesten Bauteil 5 fixiert. Für gleiche Bauteile aus Fig. 1 werden gleiche Bezugszeichen verwendet.

Fig. 3 zeigt einen Schnitt III - III durch Fig. 1 durch die Befestigung der Gliederkoppel 8. Die beiden Befestigungsstifte 23, 24 durchgreifen in montiertem Zustand des Trägerrahmens 1 und bei in die Tasche 10 eingeschobener Gliederkoppel 8 die Führungen 31, 32 des Trägerrahmens und die Löcher 33, 34 der Gliederkoppel 8 und fixieren diese somit am Trägerrahmen 1. Gleiche Bauteile aus Fig. 1 und 2 werden mit gleichen Bezugszeichen bezeichnet.

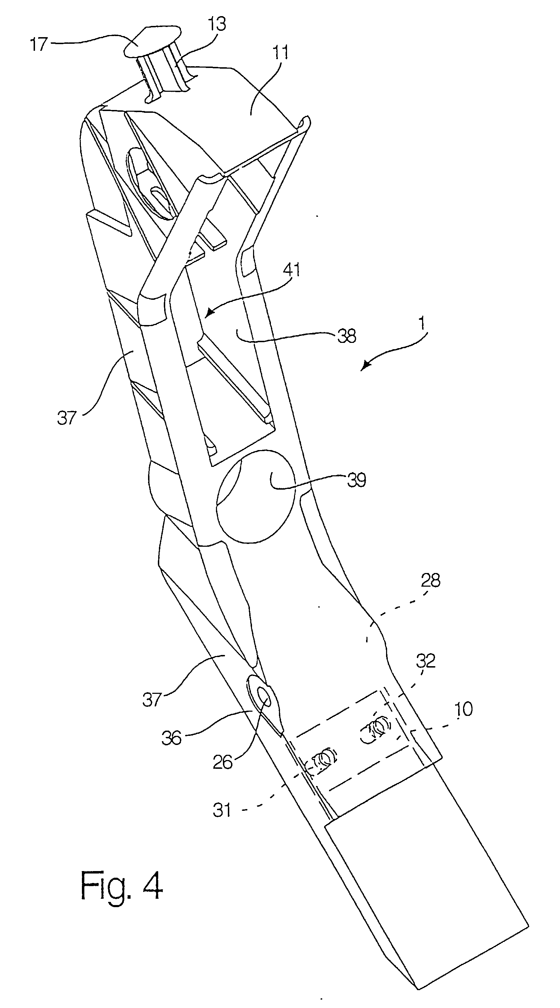

Fig. 4 zeigt eine perspektivische Ansicht des erfindungsgemäßen Trägerrahmens 1. Für gleiche Bauteile aus den Fig. 1 bis 3 werden gleiche Bezugszeichen verwendet.

Die Erfindung isc nicht auf das Ausführungsbeispiel beschränkt. So kann der Trägerrahmen 1 beispielsweise auch mit einem hängenden Pedal, also einem Fahrpedal ohne untere Verbindung zum Fahrzeugboden bzw. zum Trägerrahmen, verbunden sein.

Desweiteren müssen die Befestigungsstifte und/oder die Laschen nicht auf der Trägerplatte angeordnet sein, sondern können auch direkt mit dem fahrzeugfesten Bauteil verbunden sein.

In einer nicht dargestellten Ausführungsform der Erfindung kann die Gummihülse auch mit einer Gummimanschette verbunden sein, die den in montierter Lage oberen Teil des Trägerrahmens umschließt.

## Patentansprüche

1. Trägerrahmen für eine Fahrpedaleinheit von Kraftfahrzeugen, wobei das Fahrpedal drehbar an dem Trägerrahmen gelagert ist und dieser eine mit mindestens zwei Fixiereinrichtungen ausgestattete Rückwand zur Befestigung des Trägerrahmens an einem fahrzeugfesten Bauteil, insbesondere einer Spritzwand, umfaßt, wobei die erste Fixiereinrichtung des Trägerrahmens als Steckverbindung ausgebildet ist und der Trägerrahmen über die zweite Fixiereinrichtung gegen die Steckverbindung spannbar ist,
**dadurch gekennzeichnet,**
daß die Steckverbindung (12) im Bereich eines Drehlagers (35) des Fahrpedals (2) angeordnet ist und die zweite Fixiereinrichtung (4) mindestens eine fahrzeugfest angeordnete Lasche (21,22) umfaßt, die über einen Befestigungsbolzen (25) mit dem Trägerrahmen (1) verbunden ist.

2. Trägerrahmen nach Anspruch 1,
**dadurch gekennzeichnet,**
daß bei einem mehrgliedrigen Fahrpedal (2), das ein Fußpedal (7) und eine mit diesem verbundene Gliederkoppel (8) umfaßt, die Gliederkoppel (8) mit einem Endabschnitt (9) in einer Tasche (10) des Trägerrahmens (1) einschiebbar ist.

3. Trägerrahmen nach Anspruch 2,
**dadurch gekennzeichnet,**
daß mindestens ein fahrzeugfest angeordneter Befestigungsstift (23,24) bei eingeschobenem Endabschnitt (9) der Gliederkoppel (8) in die Tasche (10) des Trägerrahmens (1) quer zu dieser in einer Führung (31,32) des Trägerrahmens (1) und gleichzeitig in einem Loch (33,34) der Gliederkoppel (8) einsteckbar ist.

4. Trägerrahmen nach einem der Ansprüche 1 bis 3,
**dadurch gekennzeichnet,**
daß die zweite Fixiereinrichtung (4) eine Trägerplatte (20) umfaßt, auf der zwei voneinander beabstandete und normal zu dieser stehende Laschen (21,22) befestigt sind und mit der zwei Befestigungsstifte (23,24) verbunden sind, wobei der Trägerrahmen (1) in montiertem Zustand die beiden Laschen (23,24) umgreift und wobei der Befestigungsbolzen (25) durch im Trägerrahmen (1) und in den Laschen (21,22) angeordnete Löcher (26-30) steckbar sind.

5. Trägerrahmen nach Anspruch 1,
**dadurch gekennzeichnet,**
daß die Steckverbindung (12) ein mit dem Trägerrahmen (1) einstückig verbundenen Clips (13) umfaßt, der in eine Clipsaufnahme (14a) in dem fahrzeugfesten Bauteil (5) einsteckbar ist.

6. Trägerrahmen nach Anspruch 1 oder 5,
**dadurch gekennzeichnet,**
daß die Steckverbindung (12) in Einbaulage des Trägerrahmens (1) geodätisch oberhalb der zweiten Fixiereinrichtung (4) angeordnet ist.

7. Trägerrahmen nach einem der Ansprüche 5 oder 6,
**dadurch gekennzeichnet,**
daß die Clipsaufnahme (14a) des fahrzeugfesten Bauteils (5) eine Gummihülse (15) umfaßt, in die der Clips (13) einsteckbar ist.

## Claims

1. A bearing frame for an accelerator pedal unit for motor vehicles, in which the accelerator pedal is rotatably mounted on the bearing frame and the latter comprises a rear wall fitted with at least two fixing devices for securing the bearing frame to a permanently fixed part of the vehicle, in particular a front wall, the first fixing device of the bearing frame being designed as a plug-in connector and the bearing frame being tightened against the plug-in connector by means of the second fixing device,
**characterised in that**
the plug-in connector (12) is arranged in the region of a pivot bearing (35) of the accelerator pedal (2) and the second fixing device (4) comprises at least one side plate (21, 22) permanently arranged on the vehicle, which is connected to the bearing frame (1) by means of a mounting bolt (25).

2. A bearing frame as claimed in claim 1,
**characterised in that**
if a multiple-member accelerator pedal (2) is used, comprising a foot pedal (7) and a chain coupling (8) joined thereto, the chain coupling (8) can be inserted in a recess (10) of the bearing frame (1) by an end portion (9) .

3. A bearing frame as claimed in claim 2,
**characterised in that**
when end piece (9) of the chain coupling (8) is inserted in the recess (10) of the bearing frame (1), at least one mounting pin (23, 24) arranged transversely thereto and permanently joined to the vehicle can be simultaneously inserted in a guide (31, 32) of the bearing frame (1) and in a hole (33, 34) of the chain coupling (8).

4. A bearing frame as claimed in one of claims 1 to 3,
**characterised in that**
the second fixing device (4) comprises a bearing plate (20), to which two side plates (21, 22) are joined perpendicular thereto and spaced at a distance apart from one another and to which two fixing pins (23, 24) are connected, the bearing frame (1) engaging around the two side plates (23, 24) in the assembled state and the mounting bolt (25) being insertable through the bearing frame (1) and in holes (26-30) arranged in the side plates (21,22).

5. A bearing frame as claimed in claim 1,
**characterised in that**
the plug-in connector (12) comprises a clip (13) integrally joined to the bearing frame (1), which can be inserted in a clip holder (14a) in the permanently fixed part (5) of the vehicle.

6. A bearing frame as claimed in claim 1 or 5,
**characterised in that**
when the bearing frame (1) is in the mounted state, the plug-in connector (12) is arranged geodesically above the second fixing device (4).

7. A bearing frame as claimed in one of claims 5 or 6,
**characterised in that**
the clip holder (14a) of the permanently fixed part (5) of the vehicle comprises a rubber collar (15) in which the clip (13) can be inserted.

## Revendications

1. Châssis support pour un ensemble de pédale d'accélérateur de véhicules automobiles, la pédale d'accélérateur étant montée à rotation sur le châssis support et celui-ci comprenant une paroi arrière, munie d'au moins deux dispositifs de fixation, pour fixer le châssis support sur un composant fixe par rapport au véhicule, en particulier une paroi moulée par injection, le premier dispositif de fixation du châssis support étant réalisé sous la forme de liaison à emboîtement et le châssis support étant susceptible d'être serré par l'intermédiaire du deuxième dispositif de fixation, contre la liaison à emboîtement,
caractérisé en ce que
la liaison à emboîtement (12) est disposée dans la zone d'un palier de rotation (35) de la pédale d'accélérateur (2) et le deuxième dispositif de fixation (4) comprend au moins une patte (21, 22) disposée à demeure sur le véhicule, reliée au châssis support (1) par l'intermédiaire d'un boulon de fixation (25).

2. Châssis support selon la revendication 1, caractérisé en ce que, dans le cas d'une pédale d'accélérateur (2) à plusieurs éléments, comprenant une pédale d'actionnement au pied (7) et un chaînage à maillons (8) reliés à celle-ci, le chaînage à maillons (8) est susceptible d'être inséré, par un tronçon d'extrémité (9), dans une poche (10) du châssis support (1).

3. Châssis support selon la revendication 2, caractérisé ce qu'au moins une tige de fixation (23, 24) disposée rigidement sur le véhicule, lorsque le tronçon d'extrémité (9) du chaînage à maillons (8) est inséré, est susceptible d'être enfichée dans la poche (10) du châssis support (1), transversalement par rapport à celle-ci, dans un guidage (31, 32) appartenant au châssis support (1) et, simultanément, dans un trou (33, 34) appartenant au chaînage à maillons (8).

4. Châssis support selon l'une des revendications 1 à 3, caractérisé en ce que le deuxième dispositif de fixation (4) comprend une plaque support (20), sur laquelle sont fixées deux pattes (21, 22) espacées l'une de l'autre et perpendiculaire à celle-ci, et à laquelle sont reliées deux tiges de fixation (23, 24), le châssis support (1), à l'état monté, entourant les deux tiges (23, 24) et le boulon de fixation (25) étant susceptible d'être enfiché dans des trous (26-30) ménagés dans le châssis support (1) et dans les pattes (21, 22).

5. Châssis support selon la revendication 1, caractérisé en ce que la liaison à emboîtement (12) comprend une attache ou clip (13) relié(e) d'un seul tenant au châssis support (1) et susceptible d'être enfiché(e) dans un logement d'attache (14a) ménagé dans le composant (5) fixe par rapport au véhicule.

6. Châssis support selon la revendication 1 ou 5, caractérisé en ce que la liaison à emboîtement (12) est disposée géodésiquement au-dessus du deuxième dispositif de fixation (4), lorsque le châssis support (1) est en position de montage.

7. Châssis support selon l'une des revendications 5 ou 6, caractérisé en ce que le logement d'attache (14a) du composant (5) fixe par rapport au véhicule comprend une douille en caoutchouc (15) dans laquelle l'attache (13) est susceptible d'être enfichée.
